# EUROPÄISCHE PATENTANMELDUNG

(11) **EP 3 331 138 A1**
(43) Veröffentlichungstag der Anmeldung: **06.06.2018**
(21) Anmeldenummer: 17001860.0
(22) Anmeldetag: 14.11.2017
(51) Int. Cl.: H02K 15/085

(54) **NADELWICKELVORRICHTUNG**

(30) Priorität: 02.12.2016 DE 102016014371
(71) Anmelder: AUDI AG, 85045 Ingolstadt (DE)
(72) Erfinder: Uhlmann, Philipp, 85049 Ingolstadt (DE); Endisch, Christian, 85290 Geisenfeld (DE); Herrmann, Patrick, 80687 München (DE); Gerngroß, Martin, 85125 Kinding (DE)

(57) **Zusammenfassung**

Die Erfindung betrifft eine Nadelwickelvorrichtung (30, 50) zum Bewickeln eines längs einer Bezugsachse (20, 78) angeordneten Stators (12, 58) einer elektrischen Maschine, umfassend eine Wickelnadel (16, 32, 52) mit einer Auslassöffnung für einen zu wickelnden Draht (16, 46, 56), ein Verbindungsmodul (18, 54) mit einer Schwenkvorrichtung zum Schwenken der Wickelnadel (16, 32, 52) um eine Schwenkachse sowie einen Manipulator (48, 62 + 66 + 70 + 74) zum Bewegen des Verbindungsmoduls (18, 54) mit der schwenkbaren Wickelnadel (16, 32, 52) im Bereich des zu bewickelnden Stators (12, 58). Die Schwenkvorrichtung umfasst ein Kegelradgetriebe, ein Schneckengetriebe (40 + 42) oder ein sonstiges Getriebe.

## Beschreibung

Die Erfindung betrifft eine Nadelwickelvorrichtung zum Bewickeln eines längs einer Bezugsachse angeordneten Stators einer elektrischen Maschine, umfassend eine Wickelnadel mit einer Auslassöffnung für einen zu wickelnden Draht, ein Verbindungsmodul mit einer Schwenkvorrichtung zum Schwenken der Wickelnadel um eine Schwenkachse sowie einen Manipulator zum Bewegen des Verbindungsmoduls mit der schwenkbaren Wickelnadel im Bereich des zu bewickelnden Stators.

Es ist bekannt, dass Statoren für Elektromotoren, beispielsweise für den Antrieb von batteriebetriebenen Elektrofahrzeugen, einen hohlzylindrischen Stator aufweisen, welcher zumeist aus geschichteten und gegeneinander isolierten Blechen gefertigt ist. Im Inneren des Stators sind zur Erzeugung eines Drehfeldes dreiphasig elektrische Wicklungen vorgesehen, welche längs der axialen Erstreckung des Stators in jeweiligen Statornuten angeordnet sind, wobei an den axialen Enden des Stators Wickelköpfe befinden, in welchen die Wickelstränge der jeweiligen Wicklungen von einer Statornut in eine andere geführt werden. Der Wicklungsdraht ist zumeist aus Kupfer gefertigt und von einer Isolationslackschicht überzogen.

Für die Fertigung eines derartigen Stators ist eine Vielzahl an Produktionsschritten nötig, wobei der Kernprozess das Einbringen der Wicklungen darstellt. Gängige Verfahren hierfür sind die Einziehtechnik und die Nadelwickeltechnik, wobei letztere ein höheres Potential für eine Prozessautomatisierung und eine Produktverbesserung, beispielsweise durch einen erhöhten Nutfüllfaktor, bietet.

Die Nadelwickeltechnik ist ein Wickelverfahren für das direkte Bewickeln von Statoren. Der Kupferdraht wird über eine Drahtzugbremse zu einer Wickelnadel geführt und von dieser direkt auf dem Wickelkörper beziehungsweise dem Stator abgelegt. Die Wickelnadel fährt dabei in einer vertikalen Hubbewegung durch die Nutschlitze des Stators und legt dabei den Draht ab. Durch eine jeweilige anschließende Schwenkbewegung der Wickelnadel an einem der beiden axialen Enden des Stators und das Einfahren der Wickelnadel in einen parallelen Nutschlitz werden die beiden Wickelköpfe des Stators gebildet.

Zum Nadelwickeln im Bereich der beiden Wickelköpfe ist ein Schwenkmechanismus für die Wickelnadel um +/-90° erforderlich, insbesondere um den Kupferdraht beim Wickeln nicht zu schädigen. Somit kann die Wickelnadel derart angesteuert werden, dass sie in der Regel zumindest annährend senkrecht zu der zu bewickelnden Fläche steht. Die Wickelbewegung gemäß dem Stand der Technik wird zumeist über mehrere Antriebe realisiert, wobei sich mehrere Bewegungen zur gewünschten Relativbewegung zwischen Wickelnadel und Stator addieren.

Das Bewickeln der Statoren erfolgt zumeist mittels auf den jeweiligen Statortyp angepasste hochkomplexe Nadelwickelvorrichtungen. Neben dem Schwenkmechanismus der Wickelnadel ist beispielsweise ein Bewegungsmechanismus vorgesehen, welcher für eine Auf- und Abbewegung der Wickelnadel sorgt. Rotatorische Relativbewegungen zwischen Stator und Wickelnadel erfolgen zumeist über ein entsprechend angepasstes Drehen des Stators.

Das Patentdokument EP 1 759 446 B2 offenbart eine Wickelvorrichtung für zu bewickelnde Teile, insbesondere Statoren oder Anker von Elektromotoren, mit einer Aufnahme für eine Wickelnadel, welche eine Auslassöffnung für einen Draht aufweist, und welche relativ zu dem um seine Längsachse schwenkbeweglich antreibbaren zu bewickelnden Teil parallel zu dessen Längsachse sowie zusätzlich quer zu der Längsachse, insbesondere translatorisch beweglich ausgeführt ist. Die Wickelnadel ist relativ zu der Aufnahme von einer ersten Arbeitsposition in eine zweite Arbeitsposition um eine mit der Auslassöffnung der Wickelnadel im Wesentlichen übereinstimmenden Schwenkachse schwenkbeweglich ausgeführt.

Das Patentdokument EP 1 990 899 A1 offenbart eine Vorrichtung zum automatischen Wickeln von Spulen in Nuten eines Stators einer elektrischen Maschine und Befestigen von Spulenenden an stirnseitigen Terminals, mit einer in einer ersten Achsrichtung (z) axial und in einer zweiten Achsrichtung (x) rechtwinklig zur ersten Achsrichtung (z) verschiebbaren Wickelstange, einer von einem freien Ende der Wickelstange in einer durch die erste und die zweite Achsrichtung (z, x) definierten Ebene abragenden Wickelnadel und einem zur Ausführung einer Drehbewegung um eine in der ersten Achsrichtung (z) liegende Drehachse mit einem zu bewickelnden Stator verbindbaren Schaltapparat. Die Wickelnadel ist an der Wickelstange um eine rechtwinklig zur ersten und zweiten Achsrichtung (x, z) stehende dritte Achsrichtung (y) programmgesteuert stufenlos auf jede beliebige Winkelposition innerhalb eines vorgegebenen maximalen Schwenkbereichs schwenkbar angeordnet.

Nachteilig an diesem Stand der Technik ist, dass die jeweiligen Schwenkmechaniken der Wickelnadeln ausgesprochen komplex sind und daher auch auf jeweils sehr spezielle Typen von Manipulatoren optimiert sind. Eine Adaption einer Schwenkmechanik einer bestimmten Wickelnadelvorrichtung auf einen anderen als für genau diese optimierten Manipulator kann daher zu schwerwiegenden konzeptionellen Nachteilen führen.

Ausgehend von diesem Stand der Technik ist es Aufgabe der Erfindung, eine Nadelwickelvorrichtung mit einer Schwenkmechanik bereitzustellen, welche eine höhere Flexibilität aufweist und für den Einsatz mit einer Vielzahl an Manipulatoren geeignet ist.

Diese Aufgabe wird gelöst durch eine Nadelwickelvorrichtung der eingangs genannten Art. Diese ist dadurch gekennzeichnet, dass die Schwenkvorrichtung ein Kegelradgetriebe, ein Schneckengetriebe oder ein sonstiges Getriebe umfasst.

Die Grundidee der Erfindung besteht darin, die Schwenkvorrichtung mechanisch möglichst einfach zu gestalten und notwendige komplexere Bewegungsabläufe der Wickelnadel unter verstärkter Einbeziehung zusätzlicher Bewegungsfreiheitsgrade des Manipulators durchführen zu lassen.

Die erfindungsgemäße Nadelwickelvorrichtung umfasst die Schwenkvorrichtung ein Kegelradgetriebe, ein Schneckengetriebe oder ein sonstiges Getriebe. Derartige Getriebe zeichnen sich durch eine hohe Robustheit sowie einen einfachen Aufbau aus und lassen sich zudem einfach auch in einer geringen Größe herstellen. Zudem ist aufgrund der dann reduzierten Massen eine schnelleres Schwenken der Wickelnadel ermöglicht.

Ein erfindungsgemäßes Kegelradgetriebe beispielsweise umfasst im Wesentlichen zwei um 90° gegeneinander angeordnete ineinander greifende Kegelzahnräder zum Schwenken der Wickelnadel, wobei weitere drehbare Getriebekomponenten prinzipiell nicht benötigt werden. Eine Anordnung der Kegelzahnräder um 90° gegeneinander ist notwendig, um einen Aktor zum Antrieb der Schwenkvorrichtung entfernt von dieser vorsehen zu können, wobei eine Kraftübertragung zwischen Aktor und dem Getriebe beispielsweise mit einer Antriebswelle erfolgen kann. Bei einer direkten Anordnung eines Antriebes an der Schwenkvorrichtung würden die daraus resultierenden Abmessungen gegebenenfalls den im Inneren eines hohlzylindrischen Stators zur Verfügung stehenden Platz überschreiten. In analoger Weise gilt dies auch für die anderen Arten von Getrieben.

Der Aktor für die Schwenkvorrichtung kann beispielsweise an dem schwenkvorrichtungsfernen Ende des diese tragenden Manipulatorarmsegmentes vorgesehen sein, welches beim Bewickeln typischerweise nicht komplett in das Innere des zu bewickelnden Stators eingetaucht wird. Aus diesem Grunde ist dort auch ein entsprechender großer Platz zur Verfügung und eine Kollisionsgefahr nicht gegeben. Zudem werden in diesem Fall keine weiteren Getriebekomponenten benötigt, um die Antriebswelle um eventuelle weitere Bewegungsachsen des Manipulatorarms zu lenken.

Somit ist der Aufbau der Schwenkvorrichtung in vorteilhafter Weise vereinfacht und verbessert.

Entsprechend einer weiteren Erfindungsvariante umfasst die Schwenkvorrichtung einen Aktor zu deren Antrieb, insbesondere einen Servomotor. Servomotoren sind im Bereich von Stellantrieben bekannt und bewährt und lassen sich zudem einfach in die Steuerung eines Manipulators beziehungsweise Industrieroboters mit einbeziehen. Durch die vereinfachte und idealer Weise massenreduzierte Konstruktion der Schwenkvorrichtung lässt sich bedarfsweise die Leistung eines zugehörigen Aktors beziehungsweise Servomotors in vorteilhafter Weise reduzieren.

Gemäß einer weiteren Ausgestaltungsvariante der erfindungsgemäßen Nadelwickelvorrichtung ist der Manipulator ein Roboter mit wenigstens vier Bewegungsachsen und die Nadelwickelvorrichtung weist keinen Antrieb zum rotatorischen Bewegen des zu bewickelnden Stators während des Wickelvorgangs auf.

Industrieroboter sind hochflexibel einsetzbare Manipulatoren, welche in vielen Bereichen der industriellen Produktion verwendet werden. Industrieroboter können beispielsweise Knickarmroboter sein, bei welchem eine Mehrzahl von Armsegmenten in einer kinematischen Kette miteinander verbunden sind, wobei an der Verbindung zwischen zwei Armsegmenten jeweils ein Bewegungsfreiheitsgrad vorgesehen ist, beispielsweise in Form einer Drehachse oder eine Linearbewegungsachse.

Je mehr Bewegungsfreiheitsgrade vorgesehen sind, desto höher ist die Bewegungsfreiheit eines Manipulators innerhalb seines Arbeitsbereiches. Ein Roboter mit sechs Bewegungsfreiheitsgraden ist beispielsweise dafür geeignet, jeden Raumpunkt mit jeder beliebigen Orientierung anzufahren, wobei beispielsweise ein Roboter mit drei Bewegungsfreiheitsgraden lediglich dafür vorgesehen ist, jeden Raumpunkt innerhalb seines Arbeitsbereichs ohne spezielle Orientierung anzufahren.

Auf der anderen Seite führt das Vorhandensein von mehr Bewegungsfreiheitsgraden als für eine auszuführende Tätigkeit eines Manipulators benötigt werden dazu, dass auch für kleine Bewegungen der Spitze des Roboterarms große Massen der Armsegmente beschleunigt und abgebremst werden müssen, so dass dies unter Umständen zu einer reduzierten Bewegungsgeschwindigkeit während des Wickelvorgangs führt.

Eine Schwenkvorrichtung für die Wickelnadel ist auch beim Einsatz eines Manipulators unumgänglich, diese kann jedoch in vorteilhafter Weise sehr einfach ausgeführt werden, weil eventuelle Korrekturbewegungen der Wickelnadel in einer Ebene quer zur Bezugsachse, welche bei einem Schwenkmechanismus des Standes der Technik beim Schwenken gegebenenfalls mit ausgeführt werden, nunmehr entfallen können und nunmehr vom Manipulator selbst ausgeführt werden.

Erfindungsgemäß sind wenigstens vier Bewegungsfreiheitsgrade des Manipulators vorgesehen. Zwei Bewegungsfreiheitsgrade für eine Bewegung in einer Ebene quer zur Bezugsachse, ein dritter Bewegungsfreiheitsgrad für eine Auf- und Abbewegung der Wickelnadel mit ihrer Schwenkvorrichtung und ein vierter Bewegungsfreiheitsgrad für ein Drehen der Wickelnadel mit ihrer Schwenkvorrichtung um einer zur Bezugsachse parallelen Drehachse.

Selbstverständlich sind auch Manipulatoren beziehungsweise Industrieroboter mit fünf, sechs oder auch mehr Bewegungsfreiheitsgraden prinzipiell für den erfindungsgemäßen Zweck geeignet.

Durch die Verwendung eines Manipulators beziehungsweise eines Industrieroboters kann in vorteilhafter Weise der mechanische konstruktive Aufbau einer Nadelwickelvorrichtung vereinfacht werden, wobei zudem ohne jeglichen Umrüstaufwand eine deutlich erhöhte Flexibilität beim Bewickeln von verschiedenen Statortypen gegeben ist. Insbesondere kann beispielsweise auch das seither übliche Drehen des Stators beim Wickelvorgang sowie die zugehörige Drehvorrichtung entfallen.

Gemäß einer besonders bevorzugten Ausgestaltungsvariante der Nadelwickelvorrichtung umfasst der Manipulator eine Linearbewegungsachse, mittels welcher alleinig das Verbindungsmodul bei entsprechender und konstanter Ausrichtung der anderen Bewegungsachsen parallel zur Bezugsachse hin- und her bewegbar beziehungsweise auf- und ab bewegbar ist. Der sich daraus ergebende Vorteil liegt in einer vorteilhaft gesteigerten Wickelgeschwindigkeit, weil die Hauptwickelbewegung parallel zur Bezugsachse nur durch eine Bewegung der Linearbewegungsachse erfolgt, während die anderen Bewegungsachsen unbewegt bleiben. Lediglich im Bereich der beiden Wickelköpfe ist eine Bewegung der anderen Bewegungsachsen erforderlich, diese umfasst zumeist lediglich ein Umschwenken von einer Statornut in eine andere Statornut. Idealerweise ist daher das Verbindungsmodul mit der schwenkbaren Wickelnadel direkt mit der Linearbewegungsachse verbunden, um ein Bewegen von Massen während einer Bewegung der Wickelnadel längs einer Statornut auf ein Minimum zu reduzieren.

Eine weitere Erfindungsvariante ist dadurch gekennzeichnet, dass mittels der anderen Bewegungsachsen des Manipulators beziehungsweise Industrieroboters eine Bewegung des Verbindungsmoduls in einer Ebene quer zur Bezugsachse sowie eine Drehung um die Bezugsachse ermöglicht ist. Hierzu sind - wie bereits zuvor erörtert - mindestens drei weitere Bewegungsfreiheitsgrade nötig, wobei bedarfsweise auch vier oder mehr weitere Bewegungsfreiheitsgrade geeignet sind.

Gemäß einer weiteren Variante der Nadelwickelvorrichtung umfasst der Schwenkbereich der Wickelnadel +/- 90° relativ zum Verbindungsmodul. Dies ist insbesondere für das Wickeln der Wickelköpfe notwendig, um den zu wickelnden Draht beim Wickeln nicht zu beschädigen. Während bei einer Bewegung der Wickelnadel längs einer Statornut diese senkrecht zur Bezugsachse auszurichten ist, ist diese beim Wickeln der Wickelköpfe parallel zur Bezugsachse in Richtung des jeweiligen Wickelkopfes auszurichten.

Gemäß einer besonders bevorzugten Variante der Nadelwickelvorrichtung umfasst diese einen Controller zum Ansteuern des Manipulators und der Schwenkvorrichtung. Controller von Manipulatoren beziehungsweise von Industrierobotern steuern die jeweiligen Antriebe für die jeweiligen Bewegungsfreiheitsgrade des Roboterarms derart an, dass sich summarisch an der Spitze des Roboterarms eine gewünschte Bewegung entsprechend einem Bewegungsprogramm ergibt. Des Weiteren sind Controller zumeist dafür vorgesehen, an dem Roboterarm befindliche Werkzeuge entsprechend im Bewegungsprorgamm vorhandenen Zusatzinformationen synchronisiert mit der Bewegung des Roboterarms anzusteuern. Somit lässt sich ein am Roboter befindliches Werkzeug, als welches auch die Schwenkvorrichtung mit der Wickelnadel anzusehen ist, leicht in den Ablauf eines Bewegungsprogrammes mit einbeziehen. Durch verschiedene Programmvarianten können zudem in einfacher Weise ohne Umrüstarbeit verschiedene Statortypen mit ein und derselben Nadelwickelvorrichtung bewickelt werden.

Gemäß einer weiteren Ausführungsform der Nadelwickelvorrichtung ist der Controller dafür vorgesehen, die Schwenkachse als weitere Bewegungsachse des Manipulators anzusteuern. Somit würde steuerungstechnisch die Anzahl der Bewegungsfreiheitsgrade des Manipulators um einen erhöht, nämlich um den aus einer Schwenkbewegung der Nadel resultierenden Freiheitsgrad. Programmtechnisch würde dann nicht mehr ein Bezugspunkt am Verbindungsmodul vorgegeben werden, sondern ein Bezugspunkt kinematisch hinter der Schwenkvorrichtung, also beispielsweise an der Auslassöffnung der Wickelnadel. Ein Erstellen eines Bewegungsprogrammes zum Bewickeln eines Stators wird auf diese Weise in vorteilhafter Weise vereinfacht.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: eine Wickelnadel in einem Stator,
- Fig. 2: eine exemplarische Nadelwickelvorrichtung sowie
- Fig. 3: eine weitere exemplarische Nadelwickelvorrichtung.

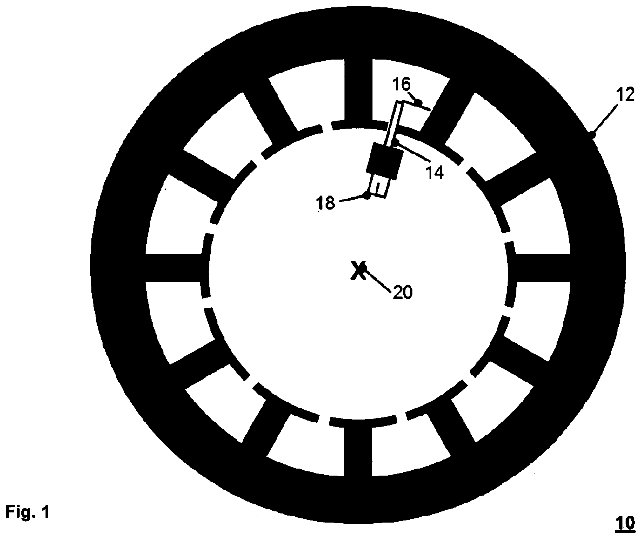

Figur 1 zeigt in einer exemplarischen Draufsicht 10 eine schwenkbar auf einem Verbindungsmodul 18 angeordnete Wickelnadel 14, welche gerade durch eine Nut eines um eine Bezugsachse 20 angeordneten Stators 12 geführt ist, um dort einen Draht 16 abzulegen. Der Stator 12 ist während des Wickelprozesses stationär und unbeweglich angeordnet. Die gesamte Relativbewegung zwischen Auslassöffnung der Wickelnadel 14 und dem Stator 12 erfolgt durch ein Bewegen des Verbindungsmoduls 16 durch einen nicht gezeigten Manipulator sowie ein Schwenken der Wickelnadel 14.

Beim Bewickeln erfolgt eine Auf- beziehungsweise Abbewegung der Wickelnadel 14 längs einer jeweilige Statornut, wobei die Wickelnadel 14 typischerweise senkrecht zur Bezugsachse 20 ausgerichtet ist. Nach Erreichen eines jeweiligen axialen Endes des Stators 12 wird die die Nadel um 90° geschwenkt, und zwar derart, dass sie in Richtung des jeweiligen axialen Endes des Stators ausgerichtet ist. Am axialen Ende wird die Wickelnadel 14 dann in eine zur ersten Nut verschiedene Statornut geführt und längs dieser bewegt. Eine derartige Bewegung erfolgt dann über einen nicht gezeigten Manipulator.

Der Außendurchmesser eines jeweiligen Stators kann beispielsweise 20 cm betragen und dessen axiale Länge beispielsweise 25cm, woraus sich dann auch entsprechende Dimensionen und Arbeitsbereiche eines zugehörigen Manipulators ableiten lassen. Je nach Ausführung der Schwenkvorrichtung der Wickelnadel ist zu gewährleisten, dass diese im Bereich der axialen Enden im geschwenkten Zustand nicht mit diesen beziehungsweise den Wickelköpfen kollidiert. Im Falle eines Manipulators mit mehreren Bewegungsfreiheitsgraden, wovon einer durch eine Linearbewegungsachse realisiert ist, muss diese etwas länger sein als die axiale Länge des Stators 14, beispielsweise mindestens 45cm Hublänge bei 25cm axialer Statorlänge.

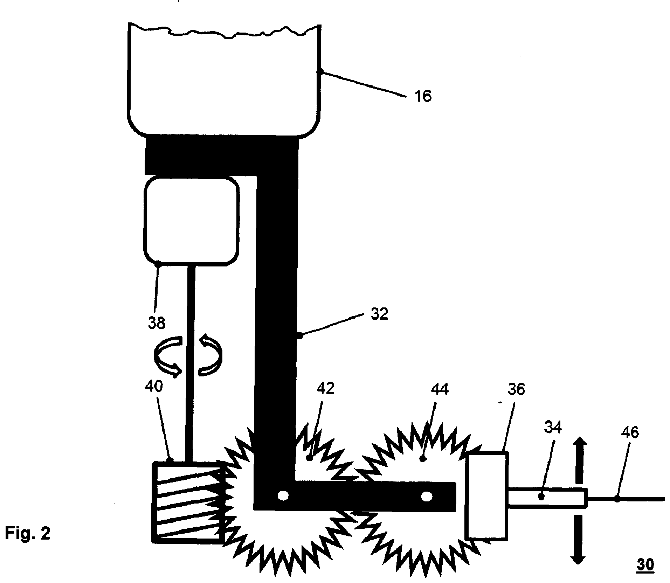

Figur 2 zeigt eine exemplarische Nadelwickelvorrichtung 30 in einer Prinzipskizze. Eine an einem Adapterstück 36 befestigte Wickelnadel 34 ist mit einem Zahnrad 44 verbunden und zusammen mit diesem um dessen Drehachse schwenkbar. In das Zahnrad 44 greift ein Zahnrad 42 ein, welches seinerseits über eine Getriebeschnecke 40 drehbar ist. Die Getriebeschnecke 40 wird von einem Aktor 38 angetrieben, in diesem Beispiel ein Servomotor. Somit kann durch den Aktor 38 eine Schwenkbewegung der Wickelnadel um wenigstens +/- 90° um die in der Fig. gezeigte Mittelstellung erfolgen. Es ist bei Verwendung eines solchen Getriebes aber auch durchaus möglich, einen erweiterten Schwenkbereich von beispielsweise +/- 100° und mehr zu realisieren, wodurch der Wickelvorgang gegebenenfalls noch verbessert werden kann. Die gezeigte Vorrichtung ist mechanisch sehr einfach zu fertigen und zeichnet sich durch ihre Kompaktheit und Robustheit aus.

Eine Halterung 32 gibt die mechanische Anordnung der Bauteile zueinander vor und bietet eine Verbindungsmöglichkeit zu einem distalen Ende eines Arms eines Manipulators 48. Selbstverständlich ist es auch möglich, einen Getriebeaufbau mit nur einem Zahnrad 42 und der Getriebeschnecke 40 und zu realisieren oder auch ein Paar von Kegelzahnrädern ohne Getriebeschnecke zu verwenden. Auch ist die Verwendung eines Flach-/Zahnriemens möglich. Zur Reduktion des Platzbedarfs ist es aber in jedem Fall ratsam, die Achse des Aktors 38 senkrecht anzuordnen, also parallel zur Bezugsachse des in dieser Fig. nicht gezeigten Stators. Hierdurch ist eine verbesserte Beweglichkeit der Wickelnadel innerhalb des lokal beschränkten Innenraums eines hohlzylindrischen Stators gegeben. Die Schwenkbewegung der Wickelnadel erfolgt über den Aktor 38 der über eine Antriebswelle mit dem Getriebe 40, 42 verbunden ist. Das Getriebe 40, 42 setzt die rotatorische Bewegung der Antriebswelle um 90° in die Schwenkbewegung der Wickelnadel 34 um.

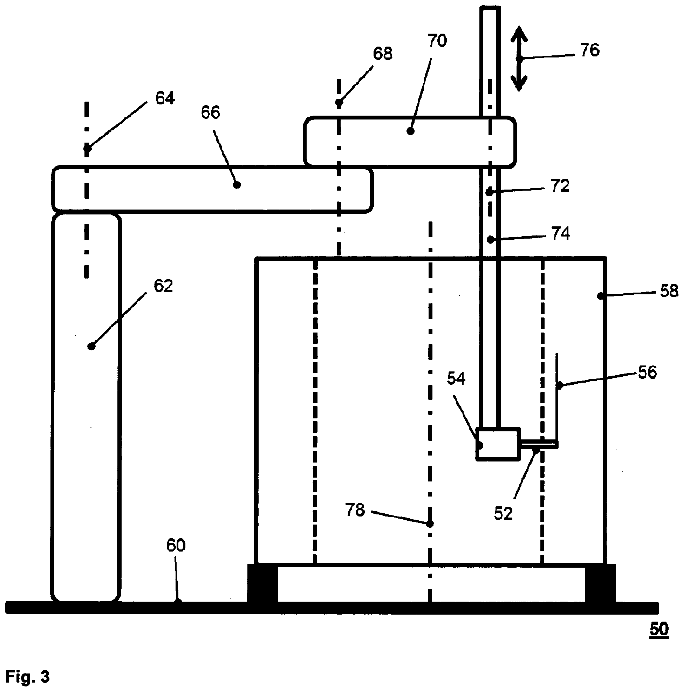

Figur 3 zeigt eine zweite exemplarische Nadelwickelvorrichtung 50 in einer Prinzipskizze als einen möglichen Gesamtaufbau. Ein Manipulator mit vier Bewegungsfreiheitsgraden ist dafür vorgesehen, ein Verbindungsmodul 54 mit einer schwenkbaren Wickelnadel 52 durch das Innere eines Stators 58 zu bewegen, um in dessen nicht gezeigten Statornuten einen Draht 56 abzulegen beziehungsweise dadurch an den axialen Enden einen jeweiligen Wickelkopf zu bilden. Der Stator 58 ist durch Abstandsklötze von einer Standfläche 60 beabstandet, so dass auch eine Zugänglichkeit des unteren axialen Endes für die Wickelnadel 52 gewährleistet ist,

Der Manipulator ist durch eine kinematische Kette von Gliedern 62, 66, 70 und 74 gebildet, welche jeweils beweglich miteinander verbunden sind. Der Manipulator weist drei Drehachsen 64, 68 und 72 auf, während die vierte Bewegungsachse 76 eine Linearbewegungsachse ist, welche parallel zur Bezugsachse 78 des Stators 58 ausgerichtet ist. Somit ist es möglich, durch eine alleinige Bewegung des Gliedes 74 die Wickelnadel in einer Statornut auf und ab zu bewegen. In vorteilhafter Weise ergibt sich hierdurch eine erhöhte Wickelgeschwindigkeit, weil die anderen Bewegungsachsen dabei still stehen. Im Falle eines Nutwechsels im Bereich der Wickelköpfe würden in diesem Beispiel die Glieder 66 und 70 geschwenkt werden, um eine entsprechende Relativposition zum Stator 58 zu erreichen. Eine Anpassung der Orientierung der Wickelnadel erfolgt dann über ein Drehen des Gliedes 74. Der Hub der Linearbewegungsachse 76 muss in jedem Fall größer sein als die axiale Länge des Stators 58, um dadurch eine Erreichbarkeit der Wickelköpfe an den axialen Enden des Stators zu gewährleisten. Der Manipulator sollte zudem derart ausgelegt sein, dass die Wickelnadel 52 in jede Statornut des unbeweglichen Stators 58 einführbar ist.

### Bezugszeichenliste

- 10: Wickelnadel in Stator
- 12: Stator
- 14: Wickelnadel
- 16: Draht
- 18: Verbindungsmodul
- 20: Bezugsachse
- 30: erste exemplarische Nadelwickelvorrichtung
- 32: Halterung
- 34: Wickelnadel
- 36: Adapter
- 38: Aktor
- 40: Getriebeschnecke
- 42: erstes Zahnrad
- 44: zweites Zahnrad
- 46: Draht
- 48: Manipulator
- 50: zweite exemplarische Nadelwickelvorrichtung
- 52: Wickelnadel
- 54: Verbindungsmodul
- 56: Draht
- 58: Stator
- 60: Standfläche
- 62: erstes Glied des Manipulators
- 64: erste Bewegungsachse des Manipulators
- 66: zweites Glied des Manipulators
- 68: zweite Bewegungsachse des Manipulators
- 70: drittes Glied des Manipulators
- 72: dritte Bewegungsachse des Manipulators
- 74: viertes Glied des Manipulators
- 76: vierte Bewegungsachse des Manipulators
- 78: Bezugsachse

## Patentansprüche

1. Nadelwickelvorrichtung (30, 50) zum Bewickeln eines längs einer Bezugsachse (20, 78) angeordneten Stators (12, 58) einer elektrischen Maschine, umfassend
• eine Wickelnadel (16, 32, 52) mit einer Auslassöffnung für einen zu wickelnden Draht (16, 46, 56),
• ein Verbindungsmodul (18, 54) mit einer Schwenkvorrichtung zum Schwenken der Wickelnadel (16, 32, 52) um eine Schwenkachse,
• einen Manipulator (48, 62 + 66 + 70 + 74) zum Bewegen des Verbindungsmoduls (18, 54) mit der schwenkbaren Wickelnadel (16, 32, 52) im Bereich des zu bewickelnden Stators (12, 58),
**dadurch gekennzeichnet,**
**dass** die Schwenkvorrichtung ein Kegelradgetriebe, ein Schneckengetriebe (40 + 42) oder ein sonstiges Getriebe umfasst.

2. Nadelwickelvorrichtung nach Anspruch 1, **dadurch gekennzeichnet, dass** die Schwenkvorrichtung einen Aktor (38) umfasst, der über eine Welle mit dem Getriebe (40 + 42) verbunden ist.

3. Nadelwickelvorrichtung nach Anspruch 1 oder 2, **dadurch gekennzeichnet, dass** der Manipulator (48, 62 + 66 + 70 + 74) ein Roboter mit wenigstens vier Bewegungsachsen (64, 68, 72, 76) ist und dass die Nadelwickelvorrichtung keinen Antrieb zum rotatorischen Bewegen des zu bewickelnden Stators (12, 58) während des Wickelvorgangs aufweist.

4. Nadelwickelvorrichtung nach einem der vorherigen Ansprüche, **dadurch gekennzeichnet, dass** der Manipulator (48, 62 + 66 + 70 + 74) eine Linearbewegungsachse (72) umfasst, mittels welcher alleinig das Verbindungsmodul (18, 54) bei entsprechender und konstanter Ausrichtung der anderen Bewegungsachsen (64, 68, 72) parallel zur Bezugsachse (20, 78) hin- und her bewegbar (76) ist.

5. Nadelwickelvorrichtung nach Anspruch 4, **dadurch gekennzeichnet, dass** mittels der anderen Bewegungsachsen (64, 68, 72) des Manipulators (48, 62 + 66 + 70 + 74) eine Bewegung des Verbindungsmoduls (18, 54) in einer Ebene quer zur Bezugsachse (20, 78) sowie eine Drehung um die Bezugsachse (20, 78) ermöglicht ist.

6. Nadelwickelvorrichtung nach Anspruch 4 oder 5, **dadurch gekennzeichnet, dass** der Schwenkbereich der Wickelnadel +/- 90° relativ zum Verbindungsmodul (18, 54) umfasst.

7. Nadelwickelvorrichtung nach einem der Ansprüche 1 bis 6, **dadurch gekennzeichnet, dass** diese einen Controller zum Ansteuern des Manipulators (48, 62 + 66 + 70 + 74) und der Schwenkvorrichtung umfasst.

8. Nadelwickelvorrichtung nach Anspruch 7, **dadurch gekennzeichnet, dass** der Controller dafür vorgesehen ist, die Schwenkachse als weitere Bewegungsachse des Manipulators anzusteuern.
